# EUROPÄISCHE PATENTSCHRIFT

(11) **EP 2 694 927 B1**
(45) Veröffentlichungstag und Bekanntmachung des Hinweises auf die Patenterteilung: **20.07.2022**
(21) Anmeldenummer: 12713003.7
(22) Anmeldetag: 23.03.2012
(51) Int. Cl.: G01F 1/84

(54) **VERFAHREN ZUM TRIMMEN EINES ROHRS**
METHOD FOR TRIMMING A PIPE
PROCÉDÉ DE RÉGLAGE FIN D'UN TUBE

(30) Priorität: 07.04.2011 DE 102011006919
(43) Veröffentlichungstag der Anmeldung: 12.02.2014
(73) Patentinhaber: Endress + Hauser Flowtec AG, 4153 Reinach (CH)
(72) Erfinder: RIEDER, Alfred, 84032 Landshut (DE); DRAHM, Wolfgang, 85435 Erding (DE); WIESMANN, Michael, 85356 Freising (DE)
(74) Vertreter: Andres, Angelika Maria
(86) Internationale Anmeldenummer: PCT/EP2012/055184
(87) Internationale Veröffentlichungsnummer: WO 2012/136489

(56) Entgegenhaltungen:
- EP-A1- 1 528 374
- EP-A2- 1 881 303
- WO-A1-03/014667
- WO-A1-2008/059015
- DE-A1- 1 929 994
- DE-A1- 2 551 943
- JP-A- 56 123 759
- US-A- 5 054 326
- US-A- 5 370 002
- US-A- 5 969 265
- US-A1- 2001 039 841

## Beschreibung

Die Erfindung betrifft ein Verfahren zum Trimmen eines, insb. als Meßrohr eines Meßwandlers vom Vibrationstyp dienenden, Rohrs auf eine vorgebbare Ziel-Biegesteifigkeit.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Medien, beispielsweise von Flüssigkeiten und/oder Gasen, oftmals solche Meßsysteme verwendet, die mittels eines Meßwandlers vom Vibrationstyp und einer daran angeschlossenen, zumeist in einem separaten Elektronik-Gehäuse untergebrachten, Umformer-Elektronik, im strömenden Medium Reaktionskräfte, beispielsweise Corioliskräfte, induzieren und von diesen abgeleitet wiederkehren die wenigstens eine Meßgröße, beispielsweise eine Massedurchflußrate, einer Dichte, einer Viskosität oder einem anderen Prozeßparameter, entsprechend repräsentierende Meßwerte erzeugen. Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der EP-A 421 812, der EP-A 462 711, der EP-A 763 720, der EP-A 1 248 084, der US-A 46 80 974, der US-A 47 38 144, der US-A 47 68 384, der US-A 48 01 897, der US-A 48 23 614, der US-A 48 79 911, der US-A 50 09 109, der US-A 50 50 439, der US-A 53 59 881, der US-A 56 02 345, der US-A 56 10 342, der US-A 57 34 112, der US-A 57 96 011, der US-A 59 26 096, der US-A 59 69 264, US-B 71 27 952, der US-A 60 92 429, der US-B 63 11 136, der US-B 68 83 387, der US-B 73 25 461, der US-B 73 92 709, der US-B 74 21 350, der US-B 76 10 795, der US-A 2010/0050783, der US-A 2010/0251830, der US-A 2010/0242623, der WO-A 96/08697, der WO-A 98/40702, der WO-A 2004/099735, der WO-A 2005/050145, der WO-A 2007/040468, der WO-A 2008/059015, der WO-A 2010/059157 oder der eigenen, nicht vorveröffentlichten deutschen Patentanmeldung DE102009046043.8 beschrieben.

Darin gezeigte Meßwandler umfassen wenigstens zwei in einem Meßwandler-Gehäuse untergebrachte baugleiche, im wesentlichen gerade oder gekrümmte, z.B. U-, oder V-förmige, Meßrohre zum Führen des - gegebenenfalls auch inhomogenen, extrem heißen oder auch sehr zähen - Mediums. Die wenigstens zwei Meßrohre können, wie beispielsweise in der erwähnten US-A 57 34 112, US-A 57 96 011 oder der US-A 2010/0242623 gezeigt, unter Bildung einer Rohranordnung mit zueinander parallel geschalteten Strömungspfaden über ein sich zwischen den Meßrohren und einem einlaßseitigen Anschlußflansch erstreckenden einlaßseitig Strömungsteiler sowie über ein sich zwischen den Meßrohren und einem auslaßseitigen Anschlußflansch erstreckenden auslaßseitig Strömungsteiler in die Prozeßleitung eingebunden sein. Die Meßrohre können aber auch, wie beispielsweise in der erwähnten EP-A 421 812, der EP-A 462 711, der EP-A 763 720 gezeigt, unter Bildung einer Rohranordnung mit einem einzigen durchgehenden Strömungspfad via Ein- und Auslaßrohrstück in die Prozeßleitung eingebunden sein. Im Meßbetrieb werden die dann - parallel bzw. seriell - durchströmten Meßrohre zwecks Generierung von durch das hindurchströmende Medium mit beeinflußten Schwingungsformen vibrieren gelassen.

Als angeregte Schwingungsform - dem sogenannten Nutzmode - wird bei Meßwandlern mit gekrümmten Meßrohren üblicherweise jene Eigenschwingungsform (Eigenmode) gewählt, bei denen jedes der Meßrohre zumindest anteilig bei einer natürlichen Resonanzfrequenz (Eigenfrequenz) um eine gedachte Längsachse des Meßwandlers nach Art eines an einem Ende eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform von im Vergleich zum Nutzmode höherer (modaler) Ordnung , dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher Nutzmode gewählt, bei dem jedes der Meßrohre zumindest anteilig Biegeschwingungen im wesentlichen in einer einzigen gedachten Schwingungsebene ausführt, so daß die Schwingungen im Coriolismode dementsprechend als zu den Nutzmodeschwingungen komplanare Biegeschwingungen gleicher Schwingfrequenz ausgebildet sind.

Zum aktiven Erregen von Schwingungen der wenigstens zwei Meßrohre weisen Meßwandler vom Vibrationstyp des weiteren eine im Betrieb von einem von der erwähnten Umformer-Elektronik bzw. einer darin entsprechend vorgesehenen, speziellen Treiberschaltung generierten und entsprechend konditionierten elektrischen Treibersignal, z.B. einem geregelten Strom, angesteuerte Erregeranordnung auf, die das Meßrohr mittels wenigstens eines im Betrieb von einem Strom durchflossenen, auf die wenigstens zwei Meßrohre praktisch direkt, insb. differentiell, einwirkenden elektro-mechanischen, insb. elektro-dynamischen, Schwingungserregers zu, insb. gegengleichen, Biegeschwingungen im Nutzmode anregt. Desweiteren umfassen derartige Meßwandler eine Sensoranordnung mit, insb. elektro-dynamischen, Schwingungssensoren zum zumindest punktuellen Erfassen einlaßseitiger und auslaßseitiger Schwingungen wenigstens eines der Meßrohre, insb. gegengleichen Biegeschwingungen der Meßrohre im Coriolismode, und zum Erzeugen von vom zu erfassenden Prozeßparameter, wie etwa dem Massedurchfluß oder der Dichte, beeinflußten, als Vibrationssignale des Meßwandlers dienenden elektrischen Sensorsignalen. Wie beispielsweise in der US-B 73 25 461 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden. Die Erregeranordnung von Meßwandlern der in Rede stehenden Art weist üblicherweise wenigstens einen elektrodynamischen und/oder differentiell auf die Meßrohre einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßwandler vom Vibrationstyp sind mittels einer zumindest zeitweise von einem Strom durchflossenen an einem der Meßrohre fixierten Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am anderen, gegengleich zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie jeweils im wesentlichen mittig an die Meßrohre angreift. Dabei ist der Schwingungserreger und insoweit die Erregeranordnung, wie beispielsweise auch bei den in der vorgeschlagenen Meßwandlern gezeigt, zumindest punktuell entlang einer gedachten mittigen Umfangslinie des jeweiligen Meßrohrs außen an diesem fixiert. Alternativ zu einer mittels eher zentral und direkt auf die jeweiligen Meßrohr wirkenden Schwingungserregern gebildeten Erregeranordnung können, wie u.a. in der US-A 60 92 429 oder der US-A 48 23 614 vorgeschlagen, beispielsweise auch mittels zweier, jeweils nicht im Zentrum des jeweiligen Meßrohrs, sondern eher ein- bzw. auslaßseitig an diesem fixierten Schwingungserreger gebildete Erregeranordnungen verwendet werden.

Bei den meisten marktgängigen Meßwandlern vom Vibrationstyp sind die Schwingungssensoren der Sensoranordnung zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer an einem der Meßrohre fixierten, zumindest zeitweise von einem veränderlichen Magnetfeld durchsetzte und damit einhergehend zumindest zeitweise mit einer induzierten Meßspannung beaufschlagten sowie einem an einem anderen der Meßrohre fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Umformer-Elektronik des In-Line-Meßgeräts verbunden, die zumeist auf möglichst kurzem Wege von den Spulen hin zum Meßwandler-Gehäuse geführt sind. Aufgrund der Überlagerung von Nutz- und Coriolismode weisen die mittels der Sensoranordnung einlaßseitig und auslaßseitig erfaßten Schwingungen der vibrierenden Meßrohre eine auch vom Massedurchfluß abhängige, meßbare Phasendifferenz auf. Üblicherweise werden die Meßrohre derartiger, z.B. in Coriolis-Massedurchflußmessern eingesetzte, Meßwandler im Betrieb auf einer momentanen natürlichen Resonanzfrequenz der für den Nutzmode gewählten Schwingungsform, z.B. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Aufrechterhaltung der Schwingungen erforderlichen Erregerenergie bzw. Erregerleistung und/oder basierend auf einer aus einer Dissipation von Schwingungsenergie resultierenden Dämpfung von Schwingungen des wenigstens einen Meßrohrs, insb. denen im vorgenannten Nutzmode. Darüberhinaus können auch weitere, aus den vorgenannten primären Meßwerten Massendurchflußrate, Dichte und Viskosität abgeleitete Meßgrößen, wie etwa gemäß der US-B 65 13 393 die Reynoldszahl zu ermittelt werden.

Bei Meßwandlern der in Rede stehenden Art ist es von besonderer Bedeutung, die Schwingungseigenschaften von einzelnen Meßwandler-Komponenten, nicht zuletzt auch des wenigstens einen Meßrohrs, mithin die nämliche Schwingungseigenschaften charakterisierenden bzw. beeinflussenden Parameter, wie etwa Rohrformen bzw. -querschnitte, Rohrwandstärken und damit einhergehend Masseverteilungen, Biegesteifigkeiten, Eigenfrequenzen etc., jedes einzelnen Meßwandler-Exemplars möglichst exakt auf ein dafür jeweils nominelles, nämlich für definierte Referenzbedingungen vorgegebenes, Ziel-Maß zu trimmen bzw. die Streuung nämlicher Parameter innerhalb einer Population produzierter Meßwandler derselben Art in einem dafür vorgegebenen, möglichst engen Toleranzbereich zu halten. Hierbei ist es u.a. auch von besonderem Interesse, die Eigenfrequenzen der jeweiligen Rohranordnung des Meßwandlers zu einer möglichst "späten" Produktionsphase auf das angestrebte Ziel-Maß, hier also eine oder mehrere ausgewählte Ziel-Eigenfrequenzen, einzustellen, um allfällige neuerliche Verstimmungen der Rohranordnung in einer nachfolgenden Produktionsphase des Meßwandlers verläßlich vermeiden zu können. In der eingangs erwähnten US-A 56 10 342 ist beispielsweise ein Verfahren zum dynamischen Abgleichen eines als Meßrohr eines Meßwandlers vom Vibrationstyp dienenden Rohrs auf eine Ziel-Steifigkeit gezeigt, bei welchem Verfahren das Rohr an seinen beiden Rohrenden in jeweils eine Bohrung eines ersten bzw. zweiten Endstücks eines Trägerrohrs durch gezieltes plastisches Verformen der Rohrwände im Bereich der Rohrenden eingepreßt und dabei zugleich auch die gesamte Rohranordnung auf eine Ziel-Eigenfrequenz adjustiert wird. Ferner ist in der eingangs erwähnten US-B 76 10 795 ein Verfahren zum Abgleichen eines als Meßrohr eines Meßwandlers vom Vibrationstyp dienenden Rohrs auf eine Ziel-Eigenfrequenz, mithin auf eine von der Rohrgeometrie und -querschnitt mitbestimmte Ziel-Biegesteifigkeit, mittels eines darin eingeleiteten und mit einem plastische Verformungen zumindest eines Teils von dessen Rohrwand herbeiführenden (Über-) Druck beaufschlagten Fluids beschrieben. Ähnliche Lösungen sind auch in der Dokumente EP 1 881 303 A2, EP 1 528 374 A1 und US 5 054 326 A offenbart.

Ein Nachteil bei den aus dem Stand der Technik bekannten Verfahren besteht u.a. darin, daß sie sehr aufwendig sind. Darüberhinaus ist ein weitere Nachteil der vorgenannten Verfahren darin zusehen, daß prinzipbedingt damit schlußendlich eine gewisse Änderung der Geometrie der Rohre, nämlich eine Abweichung von der idealen Kreisform des Querschnitts bzw. eine erhöhte Abweichung von der perfekten Homogenität des Querschnitts in Längsrichtung, mithin eine Abweichung der Kontur des Lumens des Rohrs von der Idealform herbeigeführt wird.

Eine Aufgabe der Erfindung besteht daher darin, ein Verfahren anzugeben, daß einen präzisen gleichwohl einfachen Abgleich eines oder mehrerer Meßrohre von Meßwandlern der in Rede stehenden Art auf eine Ziel-Biegesteifigkeit bzw. eine Ziel-Eigenfrequenz auch in einer Phase des Herstellungsprozesses für einen solchen Meßwandler ermöglicht, in der bereits die jeweilige Rohranordnung hergestellt, ggf. auch bereits mit Schwingungserreger- und/oder Schwingungssensor-Komponenten bestückt ist. Dies möglichst auch unter Vermeidung einer nachträglichen dauerhaften Deformation des Rohrs.

Zur Lösung der Aufgabe besteht die Erfindung in einem Verfahren zum Trimmen eines, insb. aus Metall bestehenden und/oder als Meßrohr eines Meßwandlers vom Vibrationstyp dienenden, Rohrs mit einer, beispielsweise aus Metall bestehenden und/oder zumindest abschnittsweise kreiszylindrischen, Rohrwand und mit wenigstens einem, beispielsweise aus Metall und/oder einem mit dem Material des Rohrs stoffschlüssig verbindbarem Material bestehenden und/oder plättchenförmigen, an der Rohrwand, insb. auf einer äußeren Mantelfläche der Rohrwand und/oder stoffschlüssig, angebrachten Versteifungskörper, auf eine Ziel-Biegesteifigkeit, wobei das Rohr eine Interim-Biegesteifigkeit aufweist, die größer als die Ziel-Biegesteifigkeit ist, welches Verfahren einen Schritt des Abtragens eines Teilvolumens des Versteifungskörpers zum Reduzieren der Interim-Biegesteifigkeit des Rohrs auf die Ziel-Biegesteifigkeit umfaßt. Das nach dem erfindungsgemäßen Verfahren auf eine Ziel-Biegesteifigkeit getrimmten Rohrs ist im besonderen auch für die Verwendung in einem Meßwandler vom Vibrationstyp, nicht zuletzt auch in einem Meßwandler eines Coriolis-Massendurchfluß-Meßgeräts, geeignet.

Nach einer ersten Ausgestaltung der Erfindung ist ferner vorgesehen, daß am Rohr wenigstens ein Schwingungserreger angebracht ist.

Nach einer zweiten Ausgestaltung der Erfindung ist ferner vorgesehen, daß am Rohrwenigstens ein Schwingungssensor angebracht ist.

Nach einer dritten Ausgestaltung der Erfindung ist ferner vorgesehen, daß zum Abtragen eines Teilvolumens des Versteifungskörpers, beispielsweise mittels eines Gaslasers, mittels eines Festkörperlaser oder auch mittels eines Faserlaser appliziertes, Laserlicht verwendet wird.

Nach einer vierten Ausgestaltung der Erfindung ist ferner vorgesehen, daß das Abtragen eines Teilvolumens des Versteifungskörpers einen Schritt des Einschneidens wenigstens eines Schlitzes in den Versteifungskörper umfaßt.

Nach einer fünften Ausgestaltung der Erfindung ist ferner vorgesehen, daß das Abtragen eines Teilvolumens des Versteifungskörpers einen Schritt des Einschleifens wenigstens einer Kerbe in den Versteifungskörper umfaßt.

Nach einer sechsten Ausgestaltung der Erfindung ist ferner vorgesehen, daß der Versteifungskörper auf die Mantelfläche des Rohrs mittels Schweißens und/oder Lötens, beispielsweise auch Hartlöten aufgebracht ist.

Nach einer siebenten Ausgestaltung der Erfindung ist ferner vorgesehen, daß der Versteifungskörper stabförmig ist.

Nach einer achten Ausgestaltung der Erfindung ist ferner vorgesehen, daß der Versteifungskörper plattenförmig ist.

Nach einer neunten Ausgestaltung der Erfindung ist ferner vorgesehen, daß der Versteifungskörper mittels eines, insb. metallischen, Drahtes gebildet ist.

Nach einer zehnten Ausgestaltung der Erfindung ist ferner vorgesehen, daß der Versteifungskörper mittels eines, beispielsweise metallischen, Plättchens gebildet ist.

Nach einer elften Ausgestaltung der Erfindung ist ferner vorgesehen, daß der Versteifungskörper mittels auf die Mantelfläche, beispielsweise auch wulstartig oder punktuell, aufgetragenem Lotmaterial gebildet ist.

Nach einer zwölften Ausgestaltung der Erfindung ist ferner vorgesehen, daß der Versteifungskörper mittels einer aus einem Lotmaterial geformten Wulst gebildet ist.

Nach einer ersten Weiterbildung der Erfindung umfaßt das Verfahren weiters einen Schritt des Aufbringens wenigstens eines, insb. aus Metall und/oder einem mit dem Material des Rohrs stoffschlüssig verbindbarem Material bestehenden und/oder plättchenförmigen, weiteren Versteifungskörpers auf eine Mantelfläche des Rohrs. Das Aufbringen des weiteren Versteifungskörpers auf der Mantelfläche des Rohrs kann hierbei acuh Auftragen von verflüssigtem Lotmaterial auf die Mantelfläche des Rohrs sowie Erstarrenlassen von auf die Mantelfläche des Rohrs aufgetragenem verflüssigtem Lotmaterial umfassen.

Nach einer zweiten Weiterbildung der Erfindung umfaßt das Verfahren weiters einen Schritt des Detektierens, ob das Rohr auf die Ziel-Biegesteifigkeit getrimmt ist, insb. basierend auf wenigstens einer nämlichem Rohr oder einer mittels desselben gebildeten Rohranordnung immanenten mechanischen Eigenfrequenz.

Nach einer dritten Weiterbildung der Erfindung umfaßt das Verfahren weiters einen Schritt des Ermittelns, inwieweit eine momentane Interim-Biegesteifigkeit des Rohrs von der Ziel-Biegesteifigkeit abweicht, beispielsweise auch basierend auf wenigstens einer nämlichem Rohr immanenten mechanischen Eigenfrequenz.

Nach einer vierten Weiterbildung der Erfindung umfaßt das Verfahren weiters einen Schritt des Ermittelns der Ziel-Biegesteifigkeit des Rohrs.

Nach einer fünften Weiterbildung der Erfindung umfaßt das Verfahren weiters einen Schritt des Ermittelns der Interim-Biegesteifigkeit des Rohrs.

Nach einer sechsten Weiterbildung der Erfindung umfaßt das Verfahren weiters einen Schritt des Vibrierenlassens des Rohrs zum Ermitteln von dessen Interim-Biegesteifigkeit.

Nach einer siebenten Weiterbildung der Erfindung umfaßt das Verfahren weiters einen Schritt des Bildens einer das Rohrs sowie ein damit mechanisch gekoppeltes Vergleichsrohr aufweisenden Rohranordnung. Zum Ermitteln der Ziel-Biegesteifigkeit für das Rohr und/oder zum Ermitteln der Interim-Biegesteifigkeit desselben kann beispielsweise auch das Vergleichsrohrs, nicht zuletzt auch auf einer nämlicher Rohranordnung immanenten mechanischen Eigenfrequenz, vibrieren gelassen werden.

Ein Grundgedanke der Erfindung besteht darin, eine Biegesteifigkeit eines, insb. als Komponente eines Meßwandlers vom Vibrationstyp dienenden, Rohrs dadurch sehr einfach , gleichwohl sehr effektiv auf ein entsprechendes, nämlich gewünschtes Ziel-Maß dafür, mithin eine Ziel-Biegesteifigkeit, zu trimmen, indem ein die Biegesteifigkeit des Rohrs zunächst erhöhender, zusätzlicher Versteifungskörper am Rohr, nämlich außen auf dessen Rohrwand, aufgebracht ist, etwa auch vergleichbar dem in der eingangs erwähnten US-A 56 02 345 oder der WO-A 2010/059157 jeweils gezeigten, ausschließlich der Separierung von Eigenfrequenzen verschiedener Eigenmoden der jeweiligen Rohranordnungen dienenden Versteifungskörper, und hernach ein Volumen nämlichen Versteifungskörpers um einen gewissen Betrag wieder reduziert, nämlich Material des Versteifungsköpers wieder abgetragen wird, so daß im Ergebnis der damit einhergehenden Schwächung des Versteifungskörpers die von diesem nunmehr mitbestimmte Biegesteifigkeit des Rohrs bzw. eine entsprechende Federkonstante wieder um einen entsprechenden Betrag reduziert wird. Dadurch kann die Biegsteifigkeit (Federkonstante) eines schlußendlich als Meßrohr eines Meßwandlers vom Vibrationstyp dienenden Rohrs auch in einer vergleichsweise "späten" Produktionsphase sehr präzise auf das gewünschte Ziel-Maß gebracht, in der dann ein neuerliches undefiniertes Verstimmen des Rohrs, mithin des Meßwandlers nicht mehr zu besorgen ist. Ein weiterer Vorteil des Verfahrens ist darin zu sehen, daß es grundsätzlich auch auf herkömmliche Meßwandler vom Vibrationstyp übertragbar ist, mithin auch in einer konventionellen Rohranordnung Anwendung finden kann.

Die Erfindung sowie weitere vorteilhafte Ausgestaltungen und Zweckmäßigkeiten davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im einzelnen zeigen:
- Fig. 1, 2a, 2b: ein als Kompakt-Meßgerät ausgebildetes Meßsystem für in Rohrleitungen strömende Medien in verschiedenen Seitenansichten;
- Fig. 3: schematisch nach Art eines Blockschaltbildes eine, insb. auch für ein Meßsystem gemäß den Fig. 1, 2 geeignete, Umformer-Elektronik mit daran angeschlossenem Meßwandler vom Vibrations-Typ;
- Fig. 4, 5: in, teilweise geschnittenen bzw. perspektivischen, Ansichten einen, insb. für ein Meßsystem gemäß den Fig. 1, 2 geeigneten, Meßwandler vom Vibrations-Typ; und
- Fig. 6: einen Ausschnitt eines, insb. auch als Meßrohr für einen Meßwandler gemäß den Fig. 4, 5 geeigneten, Rohrs mit einem daran angebrachten Versteifungskörper.

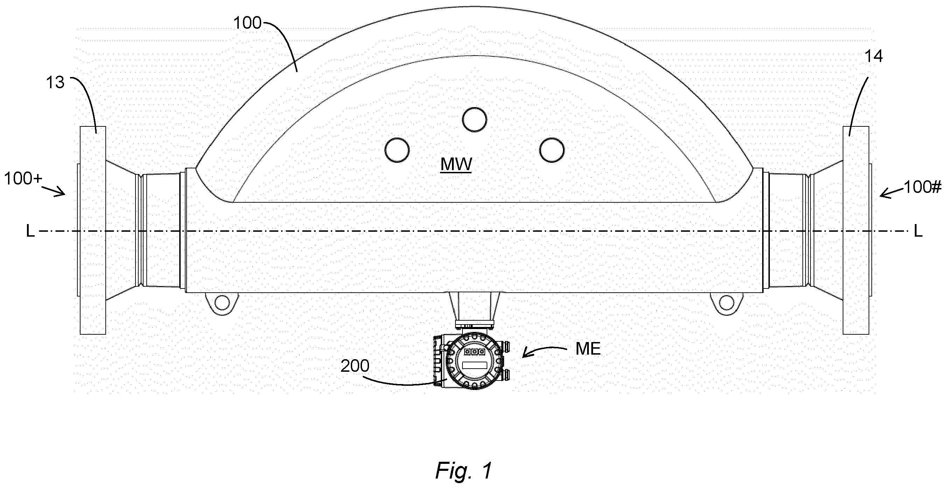

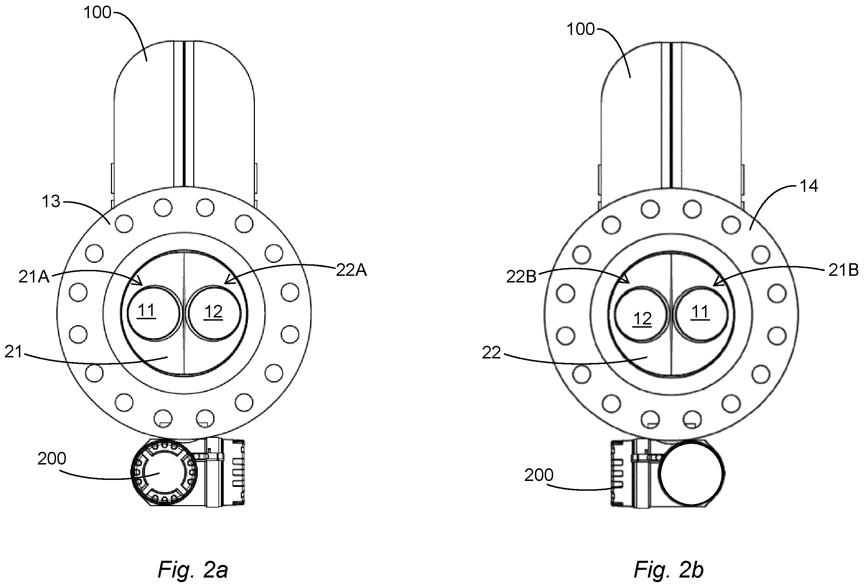

In den Fig. 1, 2a, 2b ist schematisch ein Ausführungsbeispiel für ein in eine - hier nicht dargestellte - Prozeßleitung, etwa eine Rohrleitung einer industriellen Anlage, einfügbares, beispielsweise als Coriolis-Massendurchflußmeßgerät, Dichtemeßgerät, Viskositätsmeßgerät oder dergleichen ausgebildetes, Meßsystem für fließfähige, insb. fluide, Medien, dargestellt, das im besonderen dem Messen und/oder Überwachen wenigstens eines physikalischen Parameters des Mediums, wie etwa einer Massendurchflußrate, einer Dichte, einer Viskosität oder dergleichen. Das - hier als In-Line-Meßgerät in Kompaktbauweise realisierte - Meßsystem umfaßt dafür einen über ein Einlaßende 100+ sowie ein Auslaßende 100# an die Prozeßleitung angeschlossenen, dem Erfassen des wenigstens einen Parameters und dessen Konvertierung dafür repräsentative Meßsignale dienenden Meßwandler MW, welcher Meßwandler im Betrieb entsprechend vom zu messenden Medium, wie etwa einer niedrigviskosen Flüssigkeit und/oder einer hochviskosen Paste, durchströmt und an eine mit dem Meßwandler elektrisch gekoppelte, dem Ansteuern des Meßwandlers und zum Auswerten von vom Meßwandler gelieferten Meßsignalen dienende Umformer-Elektronik ME des Meßsystems angeschlossen ist.

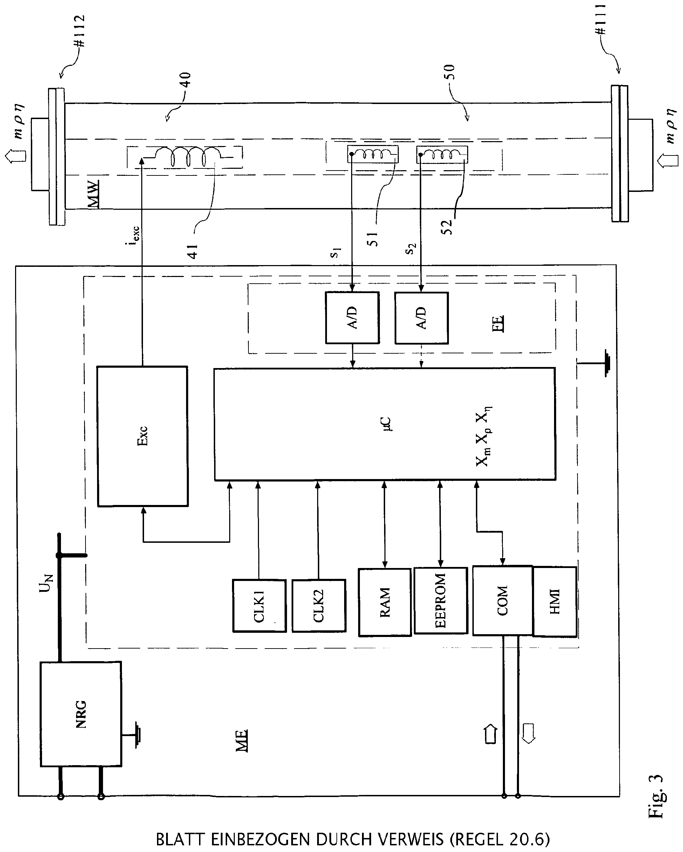

Die, insb. im Betrieb von extern via Anschlußkabel und/oder mittels interner Energiespeicher mit elektrischer Energie versorgte, Umformer-Elektronik weist, wie in Fig. 3 schematisch nach Art eines Blockschaltbildes dargestellt, eine dem Ansteuern des, beispielsweise als Meßwandler vom Vibrationstyp ausgebildeten, Meßwandlers dienende Treiber-Schaltung Exc sowie eine Meßsignale des Meßwandlers MW verarbeitende, beispielsweise mittels eines Mikrocomputers gebildete und/oder im Betrieb mit der Treiber-Schaltung Exc kommunizierende, Meß- und Auswerte-Schaltung µC des Meßsystems elektrisch angeschlossen ist, die im Betrieb die wenigstens eine Meßgröße, wie z.B. den momentanen oder einen totalisierten Massendurchfluß, repräsentierende Meßwerte liefert. Die Treiber-Schaltung Exc und die Auswerte-Schaltung µC sowie weitere, dem Betrieb des Meßsystems dienende Elektronik-Komponenten der Umformer-Elektronik, wie etwa interne Energieversorgungsschaltungen NRG zum Bereitstellen interner Versorgungsspannungen U_{N} und/oder dem Anschluß an ein übergeordnetes Meßdatenverarbeitungssystem und/oder einem Feldbus dienenden Kommunikationsschaltungen COM, sind ferner in einem entsprechenden, insb. schlag- und/oder auch explosionsfest und/oder hermetisch dicht ausgebildeten, Elektronikgehäuse 200 untergebracht. Das Elektronikgehäuse 200 des In-line-Meßgeräts kann unter Bildung eines Meßgeräts in Kompaktbauweise beispielsweise direkt am Meßwandlergehäuse 100 gehaltert sein. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Bildschirm mit Berührungseingabe, wie sie u.a. auch in sogenannten Smartphones Verwendung finden. In vorteilhafter Weise kann die, insb. programmierbare und/oder fernparametrierbare, Umformer-Elektronik ME ferner so ausgelegt sein, daß sie im Betrieb des In-Line-Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Umformer-Elektronik ME beispielsweise eine solche interne Energieversorgungsschaltung NRG aufweisen, die im Betrieb von einer im Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann. Für den Fall, daß das Meßsystem für eine Ankopplung an ein Feldbus- oder ein anderes Kommunikationssystem vorgesehen ist, kann die Umformer-Elektronik ME eine entsprechende Kommunikations-Schnittstelle COM für eine Datenkommunikation gemäß einem der einschlägigen Industriestandards aufweisen. Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Meßwandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

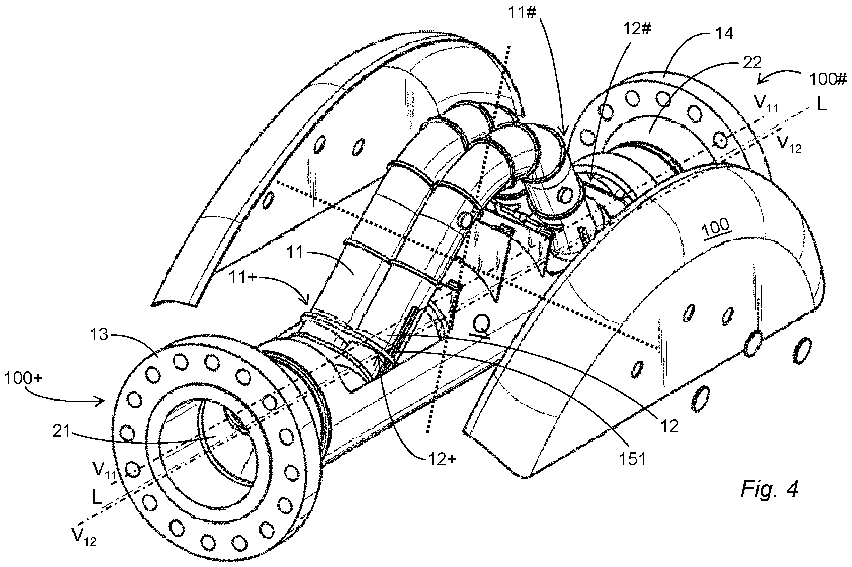

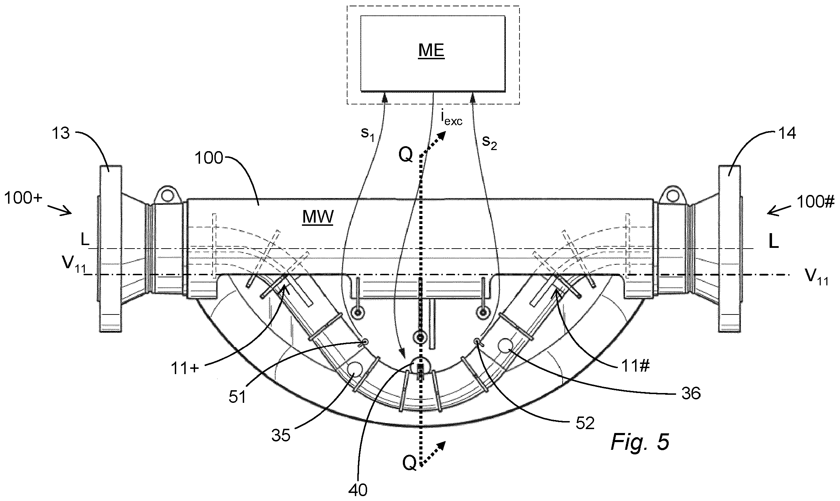

In den Fig. 4 und 5 ist ferner ein Ausführungsbeispiel für einen für die Realisierung des Meßsystems geeigneten Meßwandler MW schematisch dargestellt. Der hier gezeigte Meßwandler MW ist als Meßwandler vom Vibrationstyp ausgebildet und dient generell dazu, in einem hindurchströmenden Medium, etwa einem Gas und/oder einer Flüssigkeit, mechanische Reaktionskräfte, z.B. massedurchflußabhängige Coriolis-Kräfte, dichteabhängige Trägheitskräfte und/oder viskositätsabhängige Reibungskräfte, zu erzeugen, die sensorisch erfaßbar und insoweit auch meßbar auf den Meßwandler zurückwirken. Abgeleitet von diesen Reaktionskräften können so z.B. die Parameter Massedurchflußrate m, Dichte ρ und Viskosität η des Mediums gemessen werden.

Zum Erfassen des wenigstens einen Parameters umfaßt der Meßwandler ein in einem Meßwandler-Gehäuse 100 angeordnetes und im Betrieb von der Umformer-Elektronik ME angesteuertes Innenteil, das die physikalisch-elektrische Konvertierung des wenigstens einen zu messenden Parameters bewirkt.

Zum Führen des strömenden Mediums weist das hier gezeigte Innenteil und insoweit der hier gezeigte Meßwandler gemäß einer Ausgestaltung der Erfindung ferner einen dem Aufteilen von einströmendem Medium in zwei Teilströmungen dienenden einlaßseitigen ersten Strömungsteiler 21 mit wenigstens zwei voneinander beabstandeten Strömungsöffnungen 21A, 21B, einen dem Wiederzusammenführen der Teilströmungen dienenden auslaßseitigen zweiten Strömungsteiler 22 mit wenigsten zwei voneinander beabstandeten Strömungsöffnungen 22A, 22B sowie wenigstens zwei unter Bildung einer Rohranordnung mit zumindest zwei strömungstechnisch parallel geschalteten Strömungspfaden an die, insb. baugleichen, Strömungsteiler 21, 22 angeschlossene - schlußendlich als von Medium durchströmte Meßrohre dienende - Rohre 11, 12 auf. Dabei münden ein erstes Rohr 11 mit einem einlaßseitigen ersten Rohrende in eine erste Strömungsöffnung 21A des ersten Strömungsteilers 21 und mit einem auslaßseitigen zweiten Rohrende in eine erste Strömungsöffnung 22A des zweiten Strömungsteilers 22 und ein zweites Rohr 12 mit einem einlaßseitigen ersten Rohrende in eine zweite Strömungsöffnung 21B des ersten Strömungsteilers 21 und mit einem auslaßseitigen zweiten Rohrende in eine zweite Strömungsöffnung 22B des zweiten Strömungsteilers 202, so daß also beide - insoweit auch miteinander mechanische gekoppelten - (Meß-) Rohre bei dieser Ausgestaltung der Erfindung im ungestörten Betrieb des Meßsystem gleichzeitig und parallel von Medium durchströmt sind. Die beiden Rohre 11, 12 können beispielsweise stoffschlüssig - etwa durch Schweißen oder Löten - oder auch kraftschlüssig - etwa durch Einwalzen gemäß der eingangs erwähnten US-A 56 10 342 - mit den Strömungsteilern verbunden sein. Im hier gezeigten Ausführungsbeispiel sind die Strömungsteiler insoweit integraler Bestandteil des Meßwandlergehäuses, als mittels des ersten Strömungsteilers ein das Einlaßende 100+ des Meßwandlers definierendes einlaßseitige erstes Gehäuseende und mittels des zweiten Strömungsteilers ein das Auslaßende 100# des Meßwandlers definierendes auslaßseitige zweite Gehäuseende gebildet sind. Für den typischen Fall, daß der Meßwandler MW lösbaren mit der, beispielsweise als metallische Rohrleitung ausgebildeten, Prozeßleitung zu montieren ist, sind einlaßseitig des Meßwandlers einer erster Anschlußflansch 13 für den Anschluß an ein Medium dem Meßwandler zuführendes Leitungssegment der Prozeßleitung und auslaßseitig ein zweiter Anschlußflansch 14 für ein Medium vom Meßwandler abführendes Leitungssegment der Prozeßleitung vorgesehen. Die Anschlußflansche 13, 14 können dabei, wie bei Meßwandlern der beschriebenen Art durchaus üblich auch an das jeweilige Gehäuseende angeschweißt und insoweit endseitig in das Meßwandlergehäuse 100 integriert sein.

Im hier gezeigten Ausführungsbeispiel ist ferner jedes der zwei, sich jeweils zwischen seinem einlaßseitigen ersten Rohrende 11+ bzw. 12+ und seinem auslaßseitigen zweiten Rohrende 11# bzw. 12# mit einer - im wesentlichen frei schwingenden - Nutz-Schwinglänge erstreckenden Rohre 11, 12 zumindest abschnittsweise gekrümmt. Zum Erzeugen vorgenannter Reaktionskräfte wird jedes der zwei Rohre im Betrieb zumindest über seine Schwinglänge vibrieren gelassen - beispielsweise mit gleicher Schwingfrequenz wie das jeweils andere Rohr, jedoch dazu gegengleich - und dabei, um eine statische Ruhelage oszillierend, wiederholt elastisch verformt. Die jeweilige Schwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des jeweiligen Rohrs), im Falle gekrümmter Rohr also einer gestreckten Länge des jeweiligen Rohrs 11 bzw. 12. Nach einerweiteren Ausgestaltung der Erfindung wird jedes der Rohre im Betrieb so vibrieren gelassen, daß es um eine Schwingungsachse, insb. in einem Biegeschwingungsmode, schwingt, die zu einer die beiden jeweiligen Rohrenden 11+, 11# bzw. 12+, 12# imaginär verbindenden gedachten Verbindungsachse V₁₁ bzw. V₁₂ jeweils parallel ist.

Die, beispielsweise im Betrieb im wesentlichen gegengleich zueinander oszillierenden, Rohre sind ferner unter Bildung einer ersten Kopplungszone einlaßseitig mittels eines, beispielsweise plattenförmigen, ersten Kopplerelements 25 und unter Bildung einer zweiten Kopplungszone auslaßseitig mittels eines, beispielsweise plattenförmigen, zweiten Kopplerelements 26 miteinander mechanisch verbunden. Somit definieren hier also die erste Kopplungszone jeweils ein - einlaßseitig an die Nutzschwinglänge angrenzendes - einlaßseitiges erstes Rohrende 11+, 12+ jedes der zwei Rohre 11, 12 und die zweite Kopplungszone jeweils ein auslaßseitiges zweites Rohrende 11#, 12# des jeweiligen Rohrs 11 bzw. 12. Wie aus der Zusammenschau der Fig. 4 und 5 ferner ersichtlich ist das Kopplerelement 25 gleichweit vom ersten Gehäuseende des Meßwandlergehäuses entfernt angeordnet, wie das zweite Kopplerelement 26 vom zweiten Gehäuseende des Meßwandlergehäuses. Jedes der Meßrohre ist im hier gezeigten Ausführungsbeispiel ferner so geformt und im Meßwandler angeordnete, daß vorgenannte Verbindungsachse im wesentlichen parallel zu einer Ein- und Auslaßende des Meßwandlers imaginär verbindenden gedachten Längsachse L des Meßwandlers verläuft. Jedes der, beispielsweise aus Edelstahl, Titan, Tantal bzw. Zirkonium oder einer Legierung davon hergestellten, Meßrohre des Meßwandlers und insoweit auch eine innerhalb von Lumen verlaufende gedachte Mittellinie des jeweiligen Meßrohrs kann z.B. im wesentlichen U-förmig oder, wie auch in der Fig. 4 und 5 gezeigt, im wesentlichen V-förmig ausgebildet sein.

Wie aus der Zusammenschau der Fign. 4 und 5 ohne weiteres ersichtlich, ist jedes der wenigstens zwei Rohre 11, 12 hier zudem jeweils so geformt und angeordnet, daß vorgenannte Mittellinie, wie bei Meßwandlern der in Rede stehenden Art durchaus üblich, jeweils in einer gedachten Rohrebene liegt und daß die vorgenannten zwei Verbindungsachse V₁₁, V₁₂ zueinander parallel, mithin senkrecht zu einer gedachten Mittelebene Q der Rohranordnung, verlaufen, beispielsweise auch so, daß die beiden gedachten Rohrebenen zueinander parallel sind.

Gemäß einer weiteren Ausgestaltung der Erfindung sind die Rohre 11, 12 und die beiden Kopplerelemente 25, 26 ferner so geformt und relativ zueinander ausgerichtet, daß die beiden Kopplerelemente 25, 26 bezüglich nämlicher Mittelebene der Rohranordnung äquidistant sind, mithin also ein Massenschwerpunkt M₂₅ des ersten Kopplerelements 25 gleichweit entfernt von nämlicher Mittelebene lokalisiert ist, wie ein Massenschwerpunkt M₂₆ des zweiten Kopplerelements 26. Die frequenzjustierende Wirkung von Kopplerelementen der vorgenannten Art resultiert hierbei bekanntlich daraus, daß jedes der beiden Kopplerelemente jeweils eine Biegesteifigkeit auch um eine den Massenschwerpunkt M₂₅ des ersten Kopplerelements 25 und den Massenschwerpunkt des zweiten Kopplerelements 26 imaginär verbindende, insb. das erste Kopplerelement mit einem gleichen Schnittwinkel wie das zweite Kopplerelement imaginär schneidende, gedachte Längsachse der Rohranordnung aufweist, welche jeweilige Biegesteifigkeit jeweils einen Beitrag zu einer, nicht zuletzt auch von (Einzel-) Biegesteifigkeiten der Rohre abhängige, die Eigenfrequenzen der Rohranordnung mitbestimmende Gesamtsteifigkeit leistet.

Es sei an dieser Stelle ferner darauf hingewiesen, daß - obwohl der Meßwandler im in den Fig. 4 und 5 gezeigten Ausführungsbeispiel zwei gekrümmte Meßrohre aufweist und zumindest insoweit in seinem mechanischen Aufbau wie auch seinem Wirkprinzip dem in den US-B 69 20 798 oder US-A 57 96 011 vorgeschlagenen bzw. auch den seitens der Anmelderin unter der Typbezeichnung "PROMASS E" oder "PROMASS F" käuflich angebotenen Meßwandlern ähnelt - die Erfindung selbstverständlich auch auf Meßwandler mit geraden und/oder mehr als zwei Meßrohren, beispielsweise also vier parallelen Meßrohren, Anwendung finden kann, etwa vergleichbar den in den eingangs erwähnten US-A 56 02 345 oder WO-A 96/08697 gezeigten oder beispielsweise auch den seitens der Anmelderin unter der Typbezeichnung "PROMASS M" käuflich angebotenen Meßwandlern. Im übrigen kann der Meßwandler aber auch mittels einer lediglich ein einziges im Betrieb Medium führenden Meßrohrs mit daran gekoppeltem Blind- oder auch Tilgerrohr aufweisenden Rohranordnung gebildet sein, vergleichbar also etwa den in der US-A 55 311 26 oder der US-B 66 66 098 gezeigten oder beispielsweise auch den seitens der Anmelderin unter der Typbezeichnung "PROMASS H" käuflich angebotenen Meßwandlern. Zum aktiven Anregen mechanischer Schwingungen derwenigstens zwei, insb. auch zueinander parallelen und/oder hinsichtlich Form und Material baugleichen, Rohre, insb. auf einer oder mehreren von deren, von der Dichte des darin momentan jeweils geführten Mediums abhängigen natürlichen Eigenfrequenzen, ist Meßwandler ferner eine elektromechanische, insb. elektrodynamische, also mittels Tauchankerspulen gebildete, Erregeranordnung 40 vorgesehen. Diese dient - angesteuert von einem von der Treiber-Schaltung der Umformer-Elektronik gelieferten und, gegebenenfalls im Zusammenspiel mit der Meß- und Auswerte-Schaltung, entsprechend konditionierten Erregersignal, z.B. mit einem geregelten Strom und/oder einer geregelten Spannung -jeweils dazu, mittels der Treiber-Schaltung eingespeiste elektrische Erregerenergie bzw. - leistung E_{exc} in eine auf die wenigstens zwei Rohre, z.B. pulsförmig oder harmonisch, einwirkende und diese in der vorbeschriebenen Weise auslenkende Erregerkraft F_{exc} umzuwandeln. Die Erregerkraft F_{exc} kann, wie bei derartigen Meßwandlern üblich, bidirektional oder unidirektional ausgebildet sein und in der dem Fachmann bekannten Weise z.B. mittels einer Strom- und/oder Spannungs-Regelschaltung, hinsichtlich ihrer Amplitude eingestellt und, z.B. mittels einer Phasen-Regelschleife (PLL), hinsichtlich ihrer Frequenz auf eine momentane mechanische Eigenfrequenz der Rohranordnung abgestimmt werden. Der Aufbau und die Verwendung solcher dem Abgleichen einer Erregerfrequenz, f_{exc}, des Erregersignals auf die momentane Eigenfrequenz des gewünschten Nutzmodes dienenden Phasenregel-Schleifen ist z.B. in der US-A 48 01 897 ausführlich beschrieben. Selbstverständlich können auch andere für das Einstellen der Erregerenergie E_{exc} geeignete, dem Fachmann an und für sich bekannte Treiberschaltungen verwendet werden, beispielsweise auch gemäß den eingangs erwähnten US-A 48 79 911, US-A 50 09 109, US-A 50 50 439, oder US-B 63 11 136. Ferner sei hinsichtlich einer Verwendung solcher Treiberschaltungen für Meßwandler vom Vibrationstyp auf die mit Meßumformern der Serie "PROMASS 83" bereitgestellte Umformer-Elektroniken verwiesen, wie sie von der Anmelderin beispielsweise in Verbindung mit Meßwandlern der Serie "PROMASS E", "PROMASS F", "PROMASS M", oder auch "PROMASS H" angeboten werden. Deren Treiberschaltung ist beispielsweise jeweils so ausgeführt, daß die lateralen Biegeschwingungen im Nutzmode auf eine konstante, also auch von der Dichte, p, weitgehend unabhängige Amplitude geregelt werden.

Nach einer weiteren Ausgestaltung der Erfindung sind die wenigstens zwei Rohre 11, 12 im Betrieb mittels der Erregeranordnung zumindest zeitweise in einem Nutzmode aktiv angeregt, in dem sie, insb. überwiegend oder ausschließlich, Biegeschwingungen um die erwähnte gedachte Schwingungsachse ausführen, beispielsweise überwiegend mit genau einer natürlichen Eigenfrequenz (Resonanzfrequenz) der Rohranordnung, wie etwa jener, die einem Biegeschwingungsgrundmode entspricht, in dem jedes der Rohre innerhalb seiner jeweiligen Nutz-Schwinglänge genau einen Schwingungsbauch aufweist. Im besonderen ist hierbei ferner vorgesehen, daß jedes der Rohre, wie bei derartigen Meßwandlern mit gekrümmten Rohren durchaus üblich, mittels der Erregeranordnung zu Biegeschwingungen bei einer Erregerfrequenz, f_{exc}, so angeregt ist, daß es sich im Nutzmode, um die erwähnte gedachte Schwingungsachse - etwa nach Art eines einseitig eingespannten Auslegers - oszillierend, zumindest anteilig gemäß einer seiner natürlichen Biegeschwingungsformen ausbiegt. Die mittels der Erregeranordnung aktiv angeregten Biegeschwingungen der Rohren weisen dabei jeweils im Bereich der das jeweilige einlaßseitige Rohrende definierenden einlaßseitigen Kopplungszone einen einlaßseitigen Schwingungsknoten und im Bereich der das jeweilige auslaßseitige Rohrende definierenden auslaßseitigen Kopplungszone einen auslaßseitigen Schwingungsknoten auf, so daß also sich das jeweilige Rohr mit seiner Schwinglänge zwischen diesen beiden Schwingungsknoten im wesentlichen frei schwingend erstreckt.

Wie bei Meßwandlern mit einer Rohranordnung der in Rede stehenden Art durchaus üblich, sind die Rohre mittels der, beispielsweise differentiell zwischen beiden Rohren wirkenden, Erregeranordnung dabei insb. so angeregt, daß sie im Betrieb zumindest zeitweise und zumindest anteilig gegengleiche Biegeschwingungen um die Längsachse L ausführen. Anders gesagt, die beiden Rohre 11, 12 bewegen sich dann jeweils nach der Art von gegeneinander schwingenden Stimmgabelzinken. Für diesen Fall ist gemäß einer weiteren Ausgestaltung der Erfindung die Erregeranordnung dafür ausgelegt, gegengleiche Vibrationen des ersten Rohrs und des zweiten Rohrs, insb. Biegeschwingungen jedes der Rohre um eine das jeweilige erste Rohrende und das jeweilige zweite Rohrende imaginär verbindende gedachte Schwingungsachse, anzuregen bzw. aufrechtzuerhalten. Als Erregeranordnung 40 kann hierbei z.B. eine in konventioneller Weise mittels eines - beispielsweise einzigen - mittig, also im Bereich einer halben Schwinglänge, zwischen den wenigstens zwei Rohrplazierten und differentiell auf die Rohre wirkenden elektrodynamischen Schwingungserregers 41 gebildete Erregeranordnung 40 dienen. Der Schwingungserreger 41 kann, wie in der Fig. 4 angedeutet, beispielsweise mittels einer am ersten Rohr befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am zweiten Rohrfixiert ist, gebildet sein. Weitere - durchaus auch für das erfindungsgemäße Meßsystem geeignete - Erregeranordnungen für Schwingungen der wenigstens zwei Rohrs sind z.B. in den eingangs erwähnten US-A 46 80 974, US-A 47 38 144, US-A 47 68 384, US-A 48 01 897, US-A 48 23 614, US-A 48 79 911, US-A 50 09 109, US-A 50 50 439, der US-A 53 59 881, US-A 56 02 345, US-A 57 34 112, US-A 57 96 011, US-A 59 26 096, US-A 59 69 264, US-B 71 27 952, US-A 60 92 429, US-A 63 111 36, US-B 68 83 387, US-B 73 25 461, US-B 73 92 709, oder US-B 74 21 350 gezeigt.

Zum Vibrierenlassen der wenigsten zwei Rohre des Meßwandlers wird die Erregeranordnung 40, wie bereits erwähnt, mittels eines gleichfalls oszillierenden Erregersignals von einstellbarer Erregerfrequenz, f_{exc}, gespeist, so daß die Erregerspule des - hier einzigen am Rohr10 angreifenden Schwingungserregers - im Betrieb von einem in seiner Amplitude entsprechend geregelten Erregerstrom i_{exc} durchflossen ist, wodurch ein zum Bewegen der Rohre erforderliches Magnetfeld erzeugt wird. Das Treiber- oder auch Erregersignal bzw. dessen Erregerstrom i_{exc} kann z.B. harmonisch, mehrfrequent oder auch rechteckförmig sein. Die Erregerfrequenz, f_{exc}, des zum Aufrechterhalten der aktiv angeregten Vibrationen der Rohre erforderlichen Erregerstrom kann beim im Ausführungsbeispiel gezeigten Meßwandler in vorteilhafter Weise so gewählt und eingestellt sein, daß die Rohre, wie bereits erwähnt, überwiegend in einem Biegeschwingungsgrundmode oszillieren.

Für den betriebsmäßig vorgesehenen Fall, daß das Medium in der Prozeßleitung strömt und somit der Massendurchfluß m in der Rohranordnung von Null verschieden ist, werden mittels der in oben beschriebener Weise vibrierenden Rohre im hindurchströmenden Medium auch Corioliskräfte induziert. Diese wiederum wirken auf das jeweils durchströmte Rohrzurück und bewirken so eine zusätzliche, sensorisch erfaßbare Verformung derselben, und zwar im wesentlichen gemäß einer weiteren natürlichen Eigenschwingungsform von höherer modaler Ordnung als der Nutzmode. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß m abhängig. Als Coriolismode kann, wie bei Meßwandlern mit gekrümmten Rohren üblich, z.B. die Eigenschwingungsform des anti-symmetrischen Twistmodes dienen, also jene, bei der das jeweils durchströmte Rohr, wie bereits erwähnt, auch Drehschwingungen um eine senkrecht zur Biegschwingungsachse ausgerichteten gedachten Drehschwingungsachse ausführt, die die Mittelinie des jeweiligen Rohrs im Bereich der halben Schwingungslänge imaginär schneidet.

Zum Erfassen von Vibrationen der Rohre, insb. auch Schwingungen im Coriolismode, weist der Meßwandler ferner eine entsprechende Sensoranordnung 50 auf. Diese umfaßt, wie auch in den Fig. 4 und 5 schematische dargestellt, wenigstens einen, beispielsweise elektrodynamischen und/oder vom wenigstens einen Schwingungserreger beabstandet zwischen den wenigstens zwei Rohren 10 angeordneten, ersten Schwingungssensor 51, der ein Vibrationen wenigstens eines der zwei Rohre, beispielsweise auch gegengleiche Vibrationen der wenigstens zwei Rohre, repräsentierendes erstes Vibrationsmeßsignal s₁ des Meßwandlers liefert, beispielsweise einer mit den Schwingungen korrespondierende Spannung oder einen mit den Schwingungen korrespondierenden Strom. Ferner ist gemäß einer Weiterbildung der Erfindung vorgesehen, daß die Sensoranordnung zumindest einen, beispielsweise vom ersten Schwingungssensor 52 beabstandet zwischen den wenigstens zwei Rohren 10 angeordneten und/oder elektrodynamischen, zweiten Schwingungssensor 52 aufweist, der ein Vibrationen wenigstens eines der zwei Rohre, beispielsweise auch gegengleiche Vibrationen der wenigstens zwei Rohre, repräsentierendes zweites Vibrationsmeßsignal s₂ des Meßwandlers liefert. Die Schwingungssensoren der Sensoranordnung können in vorteilhafter Weise zudem so ausgebildet sein, daß sie Vibrationsmeßsignal gleichen Typs liefern, beispielsweise jeweils eine Signalspannung bzw. einen Signalstrom. Im hier gezeigten Ausführungsbeispiel sind der erste Schwingungssensor 51 einlaßseitig und der zweite Schwingungssensor 52 auslaßseitig zwischen den wenigstens zwei Rohren 10 angeordnet, insb. vom wenigstens einen Schwingungserreger bzw. von der Mitte des Rohrs 10 gleichweit beabstandet wie der erste Schwingungssensor bzw. derart, daß gegengleiche Vibrationen der beiden Rohre differentiell erfaßt sind. Die Schwingungssensoren der Sensoranordnung können beispielsweise aber auch so ausgebildet und im Meßwandler angeordnet sein, daß sie, wie u.a. auch in der US-A 56 02 345 vorgeschlagen, die Schwingungen relativ zum Meßwandlergehäuse erfassen.

Jedes der - typischerweise breitbandigen - Vibrationssignale s_{1,} s₂ des Meßwandlers MW weist dabei jeweils eine mit dem Nutzmode korrespondierende Signalkomponente mit einer der momentanen Schwingfrequenz, f_{exc}, der im aktiv angeregten Nutzmode schwingenden Rohre entsprechenden Signalfrequenz und einer vom aktuellen Massendurchfluß des in der Rohranordnung strömenden Medium abhängigen Phasenverschiebung relativ zu dem, beispielsweise mittels PLL-Schaltung in Abhängigkeit von einer zwischen wenigstens einem der Vibrationssignale s_{1,} s₂ und dem Erregerstrom in der Erregeranordnung existierenden Phasendifferenz generierten, Erregersignal i_{exc} auf. Selbst im Falle der Verwendung eines eher breitbandigen Erregersignals i_{exc} kann infolge der zumeist sehr hohen Schwingungsgüte des Meßwandlers MW davon ausgegangen werden, daß die mit dem Nutzmode korrespondierende Signalkomponente jedes der Vibrationssignale andere, insb. mit allfälligen externen Störungen korrespondierende und/oder als Rauschen einzustufende, Signalkomponenten überwiegt und insoweit auch zumindest innerhalb eines einer Bandbreite des Nutzmodes entsprechenden Frequenzbereichs dominierend ist.

Die vom Meßwandler gelieferten Vibrationsmeßsignale s_{1,} s₂, die jeweils eine Signalkomponente mit einer momentanen Schwingfrequenz, f_{exc}, der im aktiv angeregten Nutzmode schwingenden wenigstens zwei Rohre entsprechende Signalfrequenz aufweisen, sind, wie auch in Fig. 3 gezeigt, der Umformer-Elektronik ME und daselbst dann der darin vorgesehenen Meß- und Auswerteschaltung µC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Als Eingangsschaltung FE wie auch als Meß- und Auswerteschaltung µC können hierbei in herkömmlichen Coriolis-Massedurchfluß-Meßgeräten zwecks Konvertierung der Vibrationssignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung µC dementsprechend auch mittels eines in der Umformer-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß die Vibrationssignale s_{1,} s₂ wie bereits angedeutet, für eine Verarbeitung im Mikrocomputer mittels entsprechender Analog-zu-digital-Wandler A/D der Umformer-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83".

Die Umformer-Elektronik ME bzw. die darin enthaltene Meß- und Auswerteschaltung µC dient dabei gemäß einer weiteren Ausgestaltung der Erfindung dazu, unter Verwendung der von der Sensoranordnung 50 gelieferten Vibrationsmeßsignale s_{1,} s₂, beispielsweise anhand einer zwischen den bei anteilig in Nutz- und Coriolismode schwingendem Rohr10 generierten Vibrationssignalen s_{1,} s₂ des ersten und zweiten Schwingungssensors 51, 52 detektierten Phasendifferenz, wiederkehrend einen Massendurchfluß-Meßwert Xₘ zu ermitteln, der eine Massendurchflußrate des im Meßwandler strömenden Mediums repräsentiert. Dafür erzeugt die Umformer-Elektronik gemäß einerweiteren Ausgestaltung der Erfindung im Betrieb wiederkehrend einen Phasendifferenz-Meßwert X_{Δϕ}, der die zwischen dem ersten Vibrationssignal s₁ und dem zweiten Vibrationssignal s₂ existierenden Phasendifferenz, Δ_{ϕ}, momentan repräsentiert. Alternativ oder in Ergänzung zur Ermittlung des Massendurchfluß-Meßwert Xₘ kann die Umformer-Elektronik ME des Meßsystems auch dazu dienen, abgleitet von einer anhand der Vibrationsmeßsignale oder des Errgersignals ermittelten momentanen Schwingungsfrequenz, insb. der des aktiv angeregten Nutzmodes, einen Dichte-Meßwert zu erzeugen, der eine Dichte des im Meßwandler strömenden Mediums repräsentiert. Ferner kann die Umformer-Elektronik ME wie bei In-Line-Meßgeräten der in Rede stehenden Art durchaus üblich ggf. auch dazu verwendet werden, einen eine Viskosität des im Meßwandler strömenden Mediums repräsentierenden Viskositäts-Meßwert X_{η} zu ermitteln, vgl. hierzu auch die eingangs erwähnten US-B 72 84 449, US-B 70 17 424, US-B 69 10 366, US-B 68 40 109, der US-A 55 76 500 oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Erregersignal, insb. eine Amplitude und Frequenz von dessen den Nutzmode treibender Stromanteil oder auch eine Amplitude des gesamten, ggf. auch auf eine anhand wenigstens eines der Vibrationssignale ermittelte Schwingungsamplitude normierten Erregerstroms. Alternativ oder in Ergänzung dazu kann aber auch ein dem Einstellen des Treibersignals bzw. des Erregerstroms dienendes internes Steuersignal oder, beispielsweise im Falle einer Anregung der Vibrationen des wenigstens einen Rohrs mit einem Erregerstrom von fest vorgegebener bzw. auf konstant geregelter Amplitude, auch wenigstens eines der Vibrationssignale, insb. eine Amplitude davon, als ein Maß der für die Ermittlung des Viskositäts-Meßwerts erforderlichen Erregerenergie oder Erregerleistung bzw. Dämpfung dienen.

Wie bereits erwähnt besteht bei Rohranordnungen der in Rede stehenden Art, mithin auch damit gebildeten Meßwandlern vom Vibrationstyp, ein besonders Erfordernis darin, deren Eigenfrequenzen - jedenfalls aber auch die Eigenfrequenz des erwähnten Nutzmodes unter Referenzbedingungen - jeweils möglichst genau auf eine für definierte Referenzbedingungen vorgegebene Ziel-Eigenfrequenz einzujustieren bzw. zumindest eine, nämliche Eigenfrequenz jeweils mitbestimmende Biegesteifigkeit wenigstens eines Meßrohrs auf eine entsprechende Ziel-Biegesteifigkeit, EJ, zu trimmen. Als Referenz kann hierbei beispielsweise eine atmosphärisch offene, mithin lediglich Luft führende, Rohranordnung bei Raumtemperatur, mithin etwa 20°C, bzw. die für eine solche Rohranordnung vorab ermittelten Ziel-Eigenfrequenzen bzw. -Biegesteifigkeiten dienen. Das erfindungsgemäße Verfahren zielt nunmehr darauf ab, die Präzision, mit der ein solcher Abgleich eines oder mehrerer Meßrohre hinsichtlich wenigstens einer Ziel-Eigenfrequenz und/oder der wenigstens einen Ziel-Biegesteifigkeit EJ durchgeführt wird, zu erhöhen und nämlichen Abgleich möglichst einfach zu gestalten. Zur Realisierung der Erfindung ist vorgesehen, ein entsprechendes, schlußendlich als Meßrohr 11 eines Meßwandlers der vorgenannten Art dienendes, Ausgangsrohr im Zuge des Herstellungsprozesses des entsprechenden Meßwandlers mit einer - hier aus Metall bestehenden und zumindest abschnittsweise kreiszylindrischen - Rohrwand zunächst mit wenigstens einem zusätzlichen Versteifungskörper 151 zu versehen, derart, daß der Versteifungskörper 151 an der Rohrwand, nämlich auf einer äußeren Mantelfläche der Rohrwand, angebracht ist. Im Ergebnis dessen weist also das so gebildete Rohr hernach eine Interim-Biegesteifigkeit EJ' auf, die größer als eine durch Material und Form des Ausgangsrohrs bestimmte, insoweit vorab auch ausreichend genau bekannte Initial-Steifigkeit EJ₀ nämlichen Ausgangsrohrs ist. Wenngleich es für den Fachmann aus den vorangehenden Erläuterungen unschwer erkennbar ist, sei an dieser Stelle zusammenfassend nochmals daraufhingewiesen, das die Begriffe "Ausgangsrohr", "Rohr" und "Meßrohr" jeweils insoweit den gleichen Gegenstand bezeichnen, als es sich tatsächlich um denselben Rohrkörper zu unterschiedlichen Fertigungsphasen bzw. in der bestimmungsgemäßen Verwendung handelt, während der Begriff "Rohranordnung" sich jeweils auf denselben Rohrkörper, jeweils endseitig fest eingespannt in einer regelmäßig Biegeschwingungen desselben ermöglichenden Weise, bezieht.

Der Versteifungskörper 151 besteht gemäß einer Ausgestaltung der Erfindung aus einem mit dem Material des Ausgangsrohrs, mithin auch des damit schlußendlich gebildeten Rohrs stoffschlüssig, etwa durch Schweißen oder (Hart-) Löten, verbindbarem Material, beispielsweise also aus demselben Metall, wie das Ausgangsrohr. Der Versteifungskörper 151 kann darüberhinaus plattenförmig bzw. stabförmig, mithin eher länglich, ausgebildet sein. Somit kann als Versteifungskörper beispielsweise ein Plättchen, ein Flachstab oder auch ein einfacher Draht aus Metall dienen. Der Versteifungskörper kann aber z.B. in einfacher Weise auch lediglich mittels auf die Mantelfläche - etwa inform einer länglichen Wulst oder punktuell - aufgetragenem Lotmaterial, mithin inform einer Schweißnaht oder eines Schweißpunktes, gebildet sein. Dementsprechend umfaßt das Aufbringen des Versteifungskörpers auf der Mantelfläche des Rohrs nach einer weiteren Ausgestaltung des erfindungsgemäßen Verfahrens auch Schritte des Schweißens und/oder Lötens. Für letzteren Fall beinhaltet das Aufbringen des Versteifungskörpers auf der Mantelfläche des Rohrs somit also auch Auftragen von verflüssigtem Lotmaterial auf die Mantelfläche des Rohrs und Erstarrenlassen von auf die Mantelfläche des Rohrs aufgetragenem verflüssigtem Lotmaterial.

Erfindungsgemäß ist ferner vorgesehen, daß zum Reduzieren der Interim-Biegesteifigkeit, EJ', des Rohrs auf die angestrebte Ziel-Biegesteifigkeit EJ ein Teilvolumen 151' des Versteifungskörpers 151 wieder abgetragen wird, daß also der Beitrag des Versteifungskörpers zur gesamten Interim-Biegesteifigkeit EJ' des Rohrs, ggf. auch sukzessive, wieder reduziert wird. Dem Rechnung tragend ist der wenigstens eine Versteifungskörper 151 ferner so am Rohr fixiert und anfänglich auch so bemessen, daß die somit herbeigeführte Interim-Biegesteifigkeit des Rohrs im Ergebnis nicht nur größer als die Initial-Steifigkeit des Ausgangsrohrs, sondern zunächst auch größer als die Ziel-Biegesteifigkeit EJ ist.

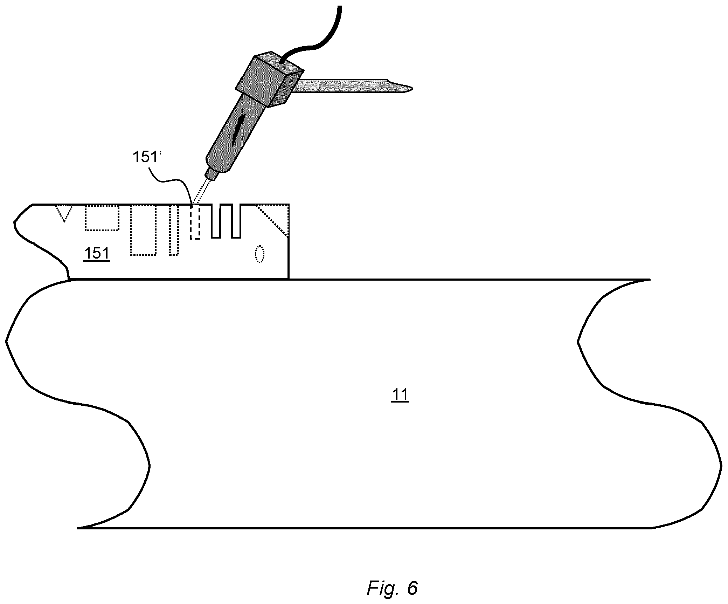

Das Abtragen selbst kann beispielsweise durch Abschneiden und/oder Abschleifen eines randständigen Teilvolumens des Versteifungskörpers, durch Einschleifen von einer oder mehreren, ggf. auch zueinander äquidistanten Kerben, durch Einbringen von Löchern, und/oder-wie auch in Fig. 6 schematisch dargestellt - durch Einschneiden von einem oder mehreren, ggf. auch zueinander parallelen und/oder äquidistanten, Schlitzen in nämlichen Versteifungskörper 151 erfolgen.

Die Interim-Biegesteifigkeit EJ' des Rohrs, mithin auch die schlußendlich erreichte Ziel-Biegesteifigkeit EJ, kann in dem Fachmann an und für bekannter Weise, beispielsweise meßtechnisch, ausreichend genau ermittelt werden, etwa, wie auch in der eingangs erwähnten der WO-A 2005/050145 beschrieben, nach Einbau der fertiggestellten Rohranordnung bzw. des nach Herstellung des Innenteils durch Einleiten einer - statischen oder auch wechselnden, mithin dynamischen - definierten Kraft, etwa via Erregeranordnung 40, und Ausmessen einer daraus resultierenden Auslenkung des Rohrs, etwa mittels wenigstens eines der Schwingungssensoren 51, 52 und/oder eines dafür geeignet angebrachten wegmessenden Sensors, beispielsweise inform von laserbasierter Sensorik.

Alternativ oder in Ergänzung zur vorgenannten Kraft-Weg-Messung kann aber auch unter Ausnutzung der für das gegebene Rohr typischerweise hinreichend bekannten funktionalen Abhängigkeit von dem Rohr (bzw. einer damit gebildeten Rohranordnung) immanenten mechanischen Eigenfrequenzen von der momentanen Biegesteifigkeit des Rohrs sehr einfach und in guter Nährung dadurch quantitativ ermittelt werden, inwieweit die Interim-Biegesteifigkeit EJ' des Rohrs von der Ziel-Biegesteifigkeit EJ abweicht, daß das Rohr auf wenigstens einer der momentanen Eigenfrequenzen, mithin in einem dementsprechenden Eigenmode, vibrierengelassen wird, und eine Diskrepanz zwischen jener momentanen Eigenfrequenz und einer für nämlichen Eigenmode vorab bestimmten bzw. erwarteten Eigenfrequenz ermittelt wird. Dies kann beispielsweise für den oben beschriebenen Fall, daß der Meßwandler eine mittels zweier Meßrohre gebildete Rohranordnung aufweist, hauptsächlich also ein möglichst exakter Abgleich der Schwingungseigenschaften der beiden Meßrohre, mithin der Ziel-Biegesteifigkeit EJ des einen der beiden Meßrohre auf die entsprechende Biegesteifigkeit des anderen der beiden Meßrohre, relativ zueinander angestrebt ist, ausreichend und wegen seiner einfachen Realisierbarkeit insoweit von Vorteil sein. Nicht zuletzt für den erwähnten Fall, daß die Interim-Biegesteifigkeit EJ' des Rohrs zwecks eines Abgleichs einer oder mehrerer Eigenfrequenzen einer mittels zweier Rohre bzw. Meßrohre gebildeten Rohranordnung ermittelt bzw. das schlußendlich als erstes Meßrohr 11 dienende Rohr hinsichtlich seiner Ziel-Biegesteifigkeit EJ an das zweite - hier also insoweit also als ein Vergleichsrohr bzw. eine Referenz für das dienende - Meßrohr 12 entsprechend angepaßt werden soll, ist gemäß einer weiteren Ausgestaltung der Erfindung vorgesehen, das Rohr- etwa nach der Herstellung der nämliches Rohr aufweisenden, ggf. auch schon in ihrer endgültigen Einbaulage im Meßwandlergehäuse 100 plazierten, Rohranordnung - zwecks des Ermittelns von dessen aktuellen Interim-Biegesteifigkeit vibrieren zu lassen, insb. auf einer von nämlicher Interim-Biegesteifigkeit maßgeblich mitbestimmten mechanischen Eigenfrequenz; dies im besonderen auch bevor der Schritt des Abtragens von Teilvolumens des Versteifungskörpers durchgeführt wird. Das Vibrierenlassen des Rohrs zwecks Ermittlung von dessen Interim-Biegesteifigkeit kann beispielsweise dann erfolgen, wenn das Vergleichsrohr 12 in einer Schwingungen desselben verhindernder Weise, etwa durch Festklemmen, vorübergehend fixiert ist. Alternativ oder in Ergänzung dazu kann das Vergleichsrohr aber auch, wie bereits erwähnt, ebenfalls vibrieren gelassen werden, etwa zum Ermitteln der Ziel-Biegesteifigkeit EJ für das Rohr und/oder dann, wenn das Rohr in einer Schwingungen desselben verhindernder Weise vorübergehend fixiert ist.

Zumindest zum Einleiten der Kraft via Erregeranordnung 40 zwecks Vibrierenlassens des Rohrs wie auch zum Detektieren daraus resultierender Vibrationen des Rohrs kann bei fertiggestelltem Innenteil beispielsweise die dem schlußendlich herzustellenden Meßsystem bereits zugewiesene Umformer-Elektronik oder aber auch eine dieser vergleichbare, in der Fertigung verbleibende Test-Elektronik verwendet werden.

Zwecks Ermittlung der tatsächlichen momentanen Interim-Biegesteifigkeit EJ' bzw. der schlußendlich erreichten Ziel-Biegesteifigkeit EJ, etwa um Zusatzinformationen für eine spätere Diagnose des Meßwandlers gemäß der erwähnten WO-A 2005/050145 bereitzustellen, istalternativ oder ergänzend zur vorgenannten Ermittlung der momentanen Abweichung Interim-Biegesteifigkeit von der Ziel-Biegesteifigkeit anhand von Messungen von Eigenfrequenzen - gemäß einer weiteren Ausgestaltung vorgesehen, eine die wenigstens eine, für die Ermittlung der Interim- bzw. Ziel-Biegesteifigkeit maßgebliche, Eigenfrequenz des Rohrs mitbestimmenden Masse des Rohrs vorab zu bestimmen, beispielsweise durch Wägen des jeweiligen Rohrs bzw. des Ausgangsrohrs und des wenigstens Versteifungskörpers und/oder durch Wägen eines anderen typgleichen Rohrs. Die so ermittelte Ziel-Biegesteifigkeit EJ kann beispielsweise später auch in der Umformer-Elektronik, etwa im erwähnten nicht-flüchtigen Datenspeicher EEPROM, abgespeichert und somit für eine spätere Überprüfung des Meßwandlers vorgehalten werden.

Zum Abtragen von Teilvolumen von wenigstens dem wenigstens einen Versteifungskörper 151 kann z.B. mittels eines Gaslasers, wie etwa einem CO₂-Laser, mittels eines Festkörperlasers, wie etwa einem gepulste ND:YAG-Laser, oder auch mittels eines Faserlaser appliziertes Laserlicht verwendet werden. Die Verwendung von Laserlicht birgt u.a. auch den Vorteil, daß nämliches Abtragen von Teilvolumen des Versteifungskörpers weitgehend automatisiert, beispielsweise mittels Roboter, bzw. auch bei vibrieren gelassenem Rohr durchgeführt werden kann, nicht zuletzt auch bei auf einer von der aktuellen Interim-Biegesteifigkeit mitbestimmten momentanen Eigenfrequenz vibrierendem Rohr. Für letzteren Fall kann so beispielsweise abwechselnd ein definiertes Teilvolumen abgetragen und hernach unverzüglich anhand der dann entsprechend angeregten Vibrationen detektiert werden, ob das Rohr bereits auf die Ziel-Biegesteifigkeit getrimmt ist, bzw. kann eine momentane Abweichung der aktuellen Interim-Biegesteifigkeit von der angestrebten Ziel-Biegesteifigkeit anhand der mit der aktuellen Interim-Biegesteifigkeit korrespondierenden momentanen Eigenfrequenz kontinuierlich erfaßt und durch entsprechend "dosiertes", weiteres Abtragen von Teilvolumen - etwa durch Einschneiden eines oder mehrerer weiterer Schlitze - weiter bis zu einem akzeptablen Wert für die Abweichung reduziert, mithin die Interim-Biegesteifigkeit sehr rasch an die angestrebte Ziel-Biegesteifigkeit herangeführt werden. Alternativ oder in Ergänzung zu Laserlicht kann beispielsweise aber auch ein, ggf. auch nur manuell betätigtes, spannabhebendes Werkzeug, wie etwa eine Feile, bzw. ein spanabhebendes Verfahren zum Abtragen von Teilvolumen des Versteifungskörpers eingesetzt werden.

Wenngleich vorangehend die Erfindung lediglich unter Bezugnahme auf einen Versteifungskörper 151 erläutert worden ist, sei an dieser Stelle daraufhingewiesen, daß selbstverständlich, nicht zuletzt auch zwecks einer weiteren Verbesserung der Präzision, mit der die Ziel-Biegesteifigkeit eingestellt, und/oder zwecks Schaffung der Möglichkeit, für verschiedene Eigenmoden - etwa dem dem Nutzmode bzw. dem dem Coriolismode entsprechenden - jeweils wirksame Ziel-Biegesteifigkeiten selektiv trimmen zu können, auch zwei oder mehr solcher Versteifungskörper am Rohr verteilt angeordnet sein können, mithin also das erfindungsgemäße Verfahren ferner einen Schritt des Aufbringens wenigstens eines, beispielsweise aus Metall und/oder einem mit dem Material des Rohrs stoffschlüssig verbindbarem Material bestehenden und/oder plättchenförmigen, weiteren Versteifungskörpers 151' auf eine Mantelfläche des Rohrs zum Bewirken der Interim-Biegesteifigkeit EJ' des Rohrs umfassen kann. Desweiteren kann es auch von Vorteil sein, den wenigstens Versteifungskörper nicht nur, wie in der Fig. 4 bzw. 5 exemplarisch gezeigt, lediglich in einem Einlaß- bzw. Auslaßbereich des Rohrs - mithin in einem Bereich, in dem Biegeschwingungen des schlußendlich gebildeten Meßrohrs 11 sowohl im Nutz- als auch Coriolismode Verformungen von vergleichsweise großem Ausmaß, insb. inform von Verbiegungen, im Rohr bewirken - anzuordnen, sondern - ausschließlich oder ergänzend - beispielsweise auch in einem mittleren Bereich des (Meß-) Rohrs - mithin in einem Bereich in dem regelmäßig Biegeschwingungen des Meßrohrs 11 im Nutz-Mode größere Verformungen des Rohrs als beispielsweise jene im Coriolis-Mode - zu plazieren, ggf. auch entsprechend wieder teilweise abzutragen. Im übrigen kann zusätzlich auch das Vergleichsrohr gleichermaßen wie das Rohr, mithin kann das zweite Meßrohr 12 gleichermaßen wie das erste Meßrohr, ein oder mehrere solcher, ggf. auch nach Einbau wieder um ein gewisses Teilvolumen reduzierte Versteifungskörper der vorgenannten Art aufweisen.

## Patentansprüche

1. Verfahren zum Trimmen eines, insb. aus Metall bestehenden und/oder als Meßrohr eines Meßwandlers vom Vibrationstyp dienenden, Rohrs (11) mit einer, insb. aus Metall bestehenden und/oder zumindest abschnittsweise kreiszylindrischen, Rohrwand und mit wenigstens einem, insb. aus Metall und/oder einem mit dem Material des Rohrs stoffschlüssig verbindbarem Material bestehenden und/oder plättchenförmigen, an der Rohrwand, insb. auf einer äußeren Mantelfläche der Rohrwand und/oder stoffschlüssig, angebrachten Versteifungskörper (151), auf eine Ziel-Biegesteifigkeit, wobei das Rohr eine Interim-Biegesteifigkeit aufweist, die größer als die Ziel-Biegesteifigkeit ist, welches Verfahren einen Schritt des Abtragens eines Teilvolumens (151') des Versteifungskörpers (151) zum Reduzieren der Interim-Biegesteifigkeit des Rohrs auf die Ziel-Biegesteifigkeit umfaßt.

2. Verfahren nach dem vorherigen Anspruch, weiters umfassend:
- einen Schritt des Detektierens, ob das Rohr (11) auf die Ziel-Biegesteifigkeit getrimmt ist, insb. basierend auf wenigstens einer nämlichem Rohr (11) oder einer mittels desselben gebildeten Rohranordnung immanenten mechanischen Eigenfrequenz; und/oder
- einen Schritt des Ermitteins, inwieweit eine momentane Interim-Biegesteifigkeit des Rohrs von der Ziel-Biegesteifigkeit abweicht, insb. basierend auf wenigstens einer nämlichem Rohr immanenten mechanischen Eigenfrequenz.

3. Verfahren nach einem der vorherigen Ansprüche, weiters umfassend:
- einen Schritt des Ermittelns der Ziel-Biegesteifigkeit des Rohrs; und/oder
- einen Schritt des Ermittelns der Interim-Biegesteifigkeit des Rohrs; und/oder
- einen Schritt des Vibrierenlassens des Rohrs zum Ermitteln von dessen Interim-Biegesteifigkeit.

4. Verfahren nach einem der vorherigen Ansprüche, weiters umfassend einen Schritt des Bildens einer das Rohrs sowie ein damit mechanisch gekoppeltes Vergleichsrohr (12) aufweisenden Rohranordnung.

5. Verfahren nach dem vorherigen Anspruch, weiters umfassend einen Schritt des Vibrierenlassens des Vergleichsrohrs, insb. auf einer nämlicher Rohranordnung immanenten mechanischen Eigenfrequenz, zum Ermitteln der Ziel-Biegesteifigkeit für das Rohr und/oder zum Ermitteln der Interim-Biegesteifigkeit desselben.

6. Verfahren nach einem der vorherigen Ansprüche,
- wobei am Rohr wenigstens ein Schwingungserreger (41) angebracht ist und/oder wobei am Rohr (11) wenigstens ein Schwingungssensor (51; 52) angebracht ist; und/oder
- wobei der Versteifungskörper auf die Mantelfläche des Rohrs mittels Schweißens und/oder Lötens, insb. Hartlöten aufgebracht ist.

7. Verfahren nach einem der vorherigen Ansprüche,
- wobei zum Abtragen eines Teilvolumens des Versteifungskörpers, insb. mittels eines Gaslasers, mittels eines Festkörperlaser oder auch mittels eines Faserlaser appliziertes, Laserlicht verwendet wird; und/oder
- wobei das Abtragen eines Teilvolumens des Versteifungskörpers einen Schritt des Einschneidens wenigstens eines Schlitzes in den Versteifungskörper umfaßt; und/oder
- wobei das Abtragen eines Teilvolumens des Versteifungskörpers einen Schritt des Einschleifens wenigstens einer Kerbe in den Versteifungskörper umfaßt.

8. Verfahren nach einem der vorherigen Ansprüche, wobei der Versteifungskörper stabförmig ist.

9. Verfahren nach einem der vorherigen Ansprüche, wobei der Versteifungskörper plattenförmig ist.

10. Verfahren nach einem der vorherigen Ansprüche,
- wobei der Versteifungskörper mittels eines, insb. metallischen, Drahtes gebildet ist; und/oder
- wobei der Versteifungskörper mittels eines, insb. metallischen, Plättchens gebildet ist.

11. Verfahren nach einem der vorherigen Ansprüche, wobei der Versteifungskörper mittels auf die Mantelfläche, insb. wulstartig oder punktuell, aufgetragenem Lotmaterial gebildet ist.

12. Verfahren nach einem der vorherigen Ansprüche, wobei der Versteifungskörper mittels einer aus einem Lotmaterial geformten Wulst gebildet ist.

13. Verfahren nach einem der vorherigen Ansprüche, weiters umfassend einen Schritt des Aufbringens wenigstens eines, insb. aus Metall und/oder einem mit dem Material des Rohrs stoffschlüssig verbindbarem Material bestehenden und/oder plättchenförmigen, weiteren Versteifungskörpers auf eine Mantelfläche des Rohrs.

14. Verfahren nach dem vorherigen Anspruch, wobei das Aufbringen des weiteren Versteifungskörpers auf der Mantelfläche des Rohrs Auftragen von verflüssigtem Lotmaterial auf die Mantelfläche des Rohrs und Erstarrenlassen von auf die Mantelfläche des Rohrs aufgetragenem verflüssigtem Lotmaterial umfaßt.

## Claims

1. Procedure for trimming a tube (11) - particularly made of metal and/or serving as the measuring tube of a vibronic-type transducer, with a tube wall particularly made of metal and/or at least partially circular cylindrical and with at least a reinforcement body (151), particularly made of metal and/or from a material which can be connected via a substance-to-substance connection to the material of the tube and/or platelet-shaped, fitted on the tube wall, particularly on an outer lateral surface of the tube wall and/or via a substance-to-substance connection - to a target bending stiffness, wherein the tube has an interim bending stiffness which is greater than the target bending stiffness, wherein said procedure comprises a step involving the removal of a partial volume (151') of the reinforcement body (151) to reduce the interim bending stiffness of the tube to the target bending stiffness.

2. Procedure as claimed in the previous claim, further comprising:
- a step to detect whether the tube (11) is trimmed to the target bending stiffness, particularly on the basis of at least a mechanical natural frequency inherent to said tube (11) or a tube arrangement formed by said tube; and/or
- a step to determine to what extent a current interim bending stiffness of the tube deviates from the target bending stiffness, particularly based on at least a mechanical natural frequency inherent to said tube.

3. Procedure as claimed in one of the previous claims, further comprising:
- a step to determine the target bending stiffness of the tube; and/or
- a step to determine the interim bending stiffness of the tube; and/or
- a step wherein the tube is allowed to vibrate to determine its interim bending stiffness.

4. Procedure as claimed in one of the previous claims, further comprising a step to form a tube arrangement comprising the tube and a reference tube (12) coupled mechanically thereto.

5. Procedure as claimed in the previous claim, further comprising a step wherein the reference tube is allowed to vibrate, particularly at a mechanical natural frequency inherent to said tube arrangement, in order to determine the target bending stiffness for the tube and/or to determine the interim bending stiffness thereof.

6. Procedure as claimed in one of the previous claims,
- wherein at least one vibration exciter (41) is mounted on the tube and/or at least one vibration sensor (51, 52) is mounted on the tube (11); and/or
- wherein the reinforcement body is fitted on the lateral surface of the tube by means of welding and/or soldering, particularly hard-soldering.

7. Procedure as claimed in one of the previous claims,
- wherein a laser light is used to remove a partial volume of the reinforcement body, particularly a laser light applied by means of a gas laser, a solid-state laser or a fiber laser; and/or
- wherein the removal of a partial volume of the reinforcement body comprises a step whereby at least one slit is cut in the reinforcement body; and/or
- wherein the removal of a partial volume of the reinforcement body comprises a step whereby at least a notch is ground into the reinforcement body.

8. Procedure as claimed in one of the previous claims, wherein the reinforcement body is rod-shaped.

9. Procedure as claimed in one of the previous claims, wherein the reinforcement body is plate-shaped.

10. Procedure as claimed in one of the previous claims,
- wherein the reinforcement body is formed by means of a wire, particularly a metal wire; and/or
- wherein the reinforcement body is formed by means of a platelet, particularly a metal platelet.

11. Procedure as claimed in one of the previous claims, wherein the reinforcement body is formed by means of solder material applied to the lateral surface, particularly in beads or at individual points.

12. Procedure as claimed in one of the previous claims, wherein the reinforcement body is realized from a bead formed from a solder material.

13. Procedure as claimed in one of the previous claims, further comprising a step involving the attachment of at least another reinforcement body, particularly made of metal and/or of a material which can be connected by means of a substance-to-substance connection to the tube material and/or platelet-shaped to a lateral surface of the tube.

14. Procedure as claimed in the previous claim, wherein the attachment of the additional reinforcement body to the lateral surface of the tube comprises the application of liquefied solder material to the lateral surface of the tube and the solidification of the liquefied solder material applied to the lateral surface of the tube.

## Revendications

1. Procédé destiné à ajuster un tube (11) - notamment en métal et/ou servant de tube de mesure d'un transducteur du type à vibrations, avec une paroi de tube notamment en métal et/ou au moins partiellement cylindrique circulaire et avec au moins un corps de renforcement (151), notamment en métal et/ou en un matériau pouvant être relié par liaison de matière au matériau du tube et/ou en forme de plaquette, placé sur la paroi du tube, notamment sur une surface d'enveloppe extérieure de la paroi du tube et/ou par liaison de matière - à une rigidité en flexion cible, le tube présentant une rigidité en flexion intermédiaire qui est supérieure à la rigidité en flexion cible, lequel procédé comprend une étape consistant à enlever un volume partiel (151') du corps de renforcement (151) pour réduire la rigidité en flexion intermédiaire du tube à la rigidité en flexion cible.

2. Procédé selon la revendication précédente, comprenant en outre :
- une étape consistant à détecter si le tube (11) est ajusté à la rigidité en flexion cible, notamment sur la base d'au moins une fréquence propre mécanique inhérente au tube (11) ou à un agencement de tubes formé par celui-ci ; et/ou
- une étape consistant à déterminer dans quelle mesure une rigidité en flexion intermédiaire momentanée du tube s'écarte de la rigidité en flexion cible, notamment sur la base d'au moins une fréquence propre mécanique inhérente au dudit tube.

3. Procédé selon l'une des revendications précédentes, comprenant en outre :
- une étape constituant à déterminer la rigidité en flexion cible du tube ; et/ou
- une étape constituant à déterminer la rigidité en flexion intermédiaire du tube ; et/ou
- une étape consistant à faire vibrer le tube pour déterminer sa rigidité en flexion intermédiaire.

4. Procédé selon l'une des revendications précédentes, comprenant en outre une étape consistant à former un agencement de tubes comprenant le tube et un tube de référence (12) couplé mécaniquement à celui-ci.

5. Procédé selon la revendication précédente, comprenant en outre une étape consistant à faire vibrer le tube de référence, notamment à une fréquence mécanique propre inhérente dudit agencement de tubes, pour déterminer la rigidité en flexion cible pour le tube et/ou pour déterminer la rigidité en flexion intermédiaire de celui-ci.

6. Procédé selon l'une des revendications précédentes,
- pour lequel au moins un excitateur de vibrations (41) est monté sur le tube et/ou au moins un capteur de vibrations (51, 52) est monté sur le tube (11) ; et/ou
- pour lequel le corps de renforcement est mis en place sur la surface d'enveloppe du tube par soudage et/ou brasage, notamment par brasage fort.

7. Procédé selon l'une des revendications précédentes,
- pour lequel on utilise une lumière laser appliquée pour l'enlèvement d'un volume partiel du corps de renforcement, notamment au moyen d'un laser à gaz, au moyen d'un laser à l'état solide ou également au moyen d'un laser à fibre ; et/ou
- pour lequel l'enlèvement d'un volume partiel du corps de renforcement comprend une étape consistant à réaliser au moins une fente dans le corps de renforcement ; et/ou
- pour lequel l'enlèvement d'un volume partiel du corps de renforcement comprend une étape consistant à réaliser au moins une encoche dans le corps de renforcement.

8. Procédé selon l'une des revendications précédentes, pour lequel le corps de renforcement est en forme de tige.

9. Procédé selon l'une des revendications précédentes, pour lequel le corps de renforcement est en forme de plaque.

10. Procédé selon l'une des revendications précédentes,
- pour lequel le corps de renforcement est formé au moyen d'un fil, notamment métallique ; et/ou
- pour lequel le corps de renforcement est formé au moyen d'une plaquette, notamment métallique.

11. Procédé selon l'une des revendications précédentes, pour lequel le corps de renforcement est formé au moyen de matériau de brasage appliqué sur la surface d'enveloppe, notamment sous forme de bourrelet ou de point.

12. Procédé selon l'une des revendications précédentes, pour lequel le corps de renforcement est réalisé au moyen d'un bourrelet formé d'un matériau de brasage.

13. Procédé selon l'une des revendications précédentes, comprenant en outre une étape consistant à ajouter sur une surface d'enveloppe du tube au moins un autre corps de renforcement, notamment en métal et/ou en un matériau pouvant être relié par liaison de matière au matériau du tube et/ou en forme de plaquette.

14. Procédé selon l'une des revendications précédentes, pour lequel l'ajout du corps de renforcement supplémentaire sur la surface d'enveloppe du tube comprend l'application de matériau de brasage liquéfié sur la surface d'enveloppe du tube et la solidification du matériau de brasage liquéfié appliqué sur la surface d'enveloppe du tube.
